# EUROPEAN PATENT APPLICATION

(11) **EP 1 139 319 A1**
(43) Date of publication of application: **04.10.2001**
(21) Application number: 98942692.9
(22) Date of filing: 16.09.1998
(51) Int. Cl.: G09B 29/04

(54) **FOLDABLE INFORMATION AND/OR GRAPHIC SHEET, AND ASSEMBLY OBTAINED THEREFROM**

(30) Priority: 16.09.1997 ES 9702443 U; 16.09.1997 ES 9702444 U
(71) Applicant: Promotec Publicidad, SL, 08026 Barcelona (ES)
(72) Inventor: MESTRES ARMENGOL, Fernando, E-08026 Barcelona (ES); LOPEZ FERNANDEZ, Francisco, E-08026 Barcelona (ES)
(74) Representative: Manresa Val, Manuel
(86) International application number: ES9800251
(87) International publication number: WO9914727

(57) **Abstract**

The invention relates to a foldable information and/or graphic sheet an to an assembly obtained therefrom. The sheet (1) comprises a first group of accordion folds (2) which are parallel to a first edge (3) of the sheet and one or a plurality of folds (4) which are perpendicular to the former folds. The folds subdivide the sheet into portions. The sheet (1) can be fixed to a plane (6) or to a surface of an article (6c) by means of one of said portions (7) located adjacent to one of the sides of the sheet. It incorporates a tongue (8) which is joined to and protrudes from a portion (9) of the sheet (1), situated in the same line as the portion (7) and distal therefrom so as to facilitate the unfolding of the sheet (1) by pulling from said tongue (8) which also helps in the folding. An information assembly integrates a plurality of said sheets (1) fixed to a support surface.

## Description

### Field of the art

This invention refers to a sheet having folds which shows text information and/or graphics, which may adopt a condition indistinctly folded or unfolded comprising a first group of accordion folds, which are parallel to a first edge of the sheet and one or several folds which are perpendicular to the former folds, achieved when the sheet is completely folded by the first group of folds , parallel to a second edge of the sheet, the sheet being capable to be fixed to a plane or surface of an article by one of said portions and including a means actively assisting to unfolding/folding the sheet by pulling. The arrangement shown is applicable to drawings, advertising or information brochures, etc. The proposed sheet offers namely, a small size when in folded condition, making its stocking and transportation easy.

The invention also refers to an interactive information assembly including a bottom surface which may display information and/or graphics, and on which are fixed in different positions several units capable to be unfolded constituted, each of them by a sheet with folds as the above mentioned which displays information of a text and/or graphics, which can indistinctly adopt a folded or unfolded condition with an element actively assisting in unfolding/folding as above.

### Prior art

A system is known since several years ago we could call of "booklet" structure comprising covers formed by a single rigid portion folded by its central part such as a booklet or a note book, containing the folded sheet within it. Said system offers a very effective protection to the fully folded sheet having folds, but it is hard to unfold it which has to be completely made by hand, grasping the drawing by one of its portions with the risk to damage it.

An arrangement of sheet with folds can also be mentioned which is found in the commerce marketed with the brand Z-card, protected by patent EP-B-0288.472 and which is based on the insertion of two rigid parts, acting as covers, placed on diagonally opposed segments of the sheet. Said embodiment has several drawbacks, namely arising from the production cost (because of the attachment at stated areas of the two rigid panels), handling characteristics, which demand a training, limited possibilities of use (adaptability to large sizes etc.) insufficient protection of the set of sheets (access to them from any side) and the information being displayed to the user not directly facing him/her as main drawbacks.

In the patent WO92/10828, the application of a sheet with folds is disclosed according to above patent EP-0288,472, ready to be fixed on an article, with means to keep it in folded condition, at least until a first consult of the information printed on said sheet.

On their hand, patents EP-A-87987 and EP-A-0256672 disclose labels to join to a container comprising an adhesive fixing portion from which is starting a sheet divided into portions by folding lines and capable to adopt a folded or unfolded position.

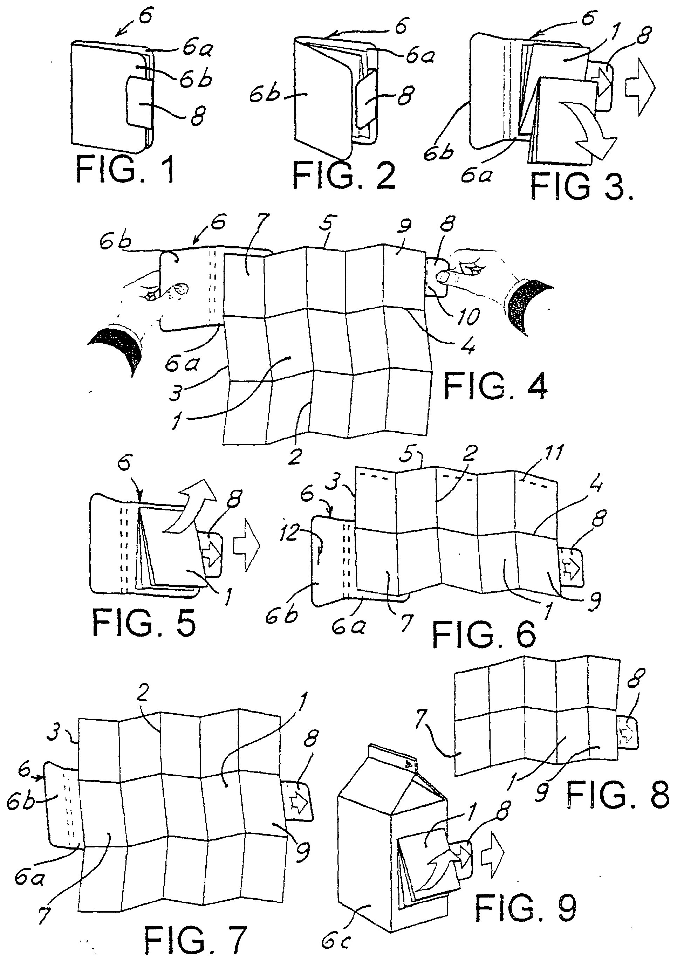

Patent GB 282 780 which represent the closest prior art to the subject matter of this invention, shows (see Fig. 1) an unfoldable information and/or graphic sheet of the type which comprises a first group of accordion folds 6 parallel to a first edge of the sheet and at least one fold 7 perpendicular to the former ones, parallel to a second edge of the sheet, said folds 6, 7, subdividing the sheet into portions, and said sheet being capable of being fastened to a plane or surface of an article by one of said side portions located close to one of the sheet sides 8, 9. No means have been provided in said graphic sheet to make possible the unfolding of the sheet in a single action.

With the invention disclosed in this patent, above drawbacks are overcome and it offers a new easy to use unfolding system which virtually does not need instructions for handling it, facilitating the junction of the unfoldable sheet to a "booklet" structure or surface of an article and effectively protecting the set of folded sheets it includes.

As for the application of said sheet to form an assembly as it is proposed by the invention, no similar background is known. In the state of the art there exists solutions, mainly in the advertising sector, based on units formed by simple accordion folded sheets, comprising a single row of portions joined by their edges, band or by a loop of one of the portions to a sheet or main drawing, but these systems suffer the drawbacks that once open the folded sheet is unstable, falls by gravity unless it includes a given retaining means but which complicates the system. In addition, the long strip condition of known systems makes them unable to more slowly display the information required.

With the assembly which is proposed herein, based on the association of several unfoldable sheets as the one proposed but capable to come back to a stable folded position, there is an ideal system available for the embodiment of interactive information and/or graphic assemblies based on unfoldable units (which can be consulted at by the user selection) easy to handle and intuitive and self-supported.

### Description of the invention

With the invention disclosed in this description, an arrangement is provided thanks to which it is possible to quickly and easily unfold a folded sheet, such as a drawing. The incorporation of a pulling element at the right position, as it is described below, is a key element which effectively and simply facilitates unfolding this kind of folded sheets.

The information and/or graphic sheet object of this invention is of the type which includes a first group of accordion folds, parallel to a first edge of the sheet and at least one fold perpendicular to the former ones, parallel to a second edge of the sheet, said folds subdividing the sheet into portions, and said sheet being capable to be attached on a plane or surface of an article by one of said portions located close to one of the sheet sides, characterized in that it includes a tongue joined to and protruding from a sheet portion located in a same row as the fastening portion and distal thereof, acting as pull, so that it facilitates unfolding the sheet by pulling said tongue, which also actively assists in its folding.

According to another characteristic of the invention, said tongue is a side extension of said distal portion, obtained by die-cut, capable to eventually fold on itself to be adhered by an end band on the part from which it is starting.

According to another characteristic of the invention, said extension which constitutes the tongue incorporates a film or varnish made of a hardening-stiffening material.

According to another characteristic of the invention, said tongue comprises a stiff sheet part adhered on said distal portion, for example T-shaped, and with at least a part protruding from the superimposed part and fastened to said portion, capable to be grasped as a pull.

According to another characteristic of the invention, the material which constitutes it is resistant to water and other liquids, such as plastified paper.

According to another characteristic of the invention, the row which contains the portion for fastening the sheet and which bears the tongue/pull is, in unfolded condition, the higher of said sheet, so that it is capable to be partly open by gravity.

According to another characteristic of the invention, the row which contains the sheet fastening portion and bearing the tongue/pull on a central band delimited by folds at both sides.

According to another characteristic of the invention, the row which contains the sheet fastening portion and bearing the tongue/pull is, in unfolded condition, the lower one.

According to another characteristic of the invention, in the case of joining the portion to a surface of an article, a sealing strip has been provided which keeps the folded sheet portions joined.

According to another characteristic of the invention, said tongue or pull shows a folding line which allows it to be turned down on the set of folded portions, and the sheet fastening portion is joined to a first part of a stiff or half-stiff sheet which possesses a second part which is folded in a dihedral angle and as a flap whose parts constitute two hinged covers such as a booklet or casing, capable to contain within it all said sheet, in folded condition, including said folded tongue.

According to another characteristic of the invention, said tongue or pull includes retaining means capable to be fixed on the internal or external face of the rigid sheet acting as flap of the booklet structure.

According to another characteristic of the invention, said tongue retaining means consist in strata provided with minute and flexible hooks on one face of the tongue and likewise minute loops on the internal or external face of the flap, in areas which may be superimposed facing each other.

According to another characteristic of the invention, said retaining means consist in adhesive points capable to be released and newly used, arranged on one face of the tongue and on the internal or external face of the flap, on points which may be superimposed facing each other.

According to another characteristic of the invention, said retaining means consist in shapes die-cut or cut in some of the rigid portions which include the covers or the pull tongue in order that some protruding parts may be linked to each other offering a small resistance to opening said covers and to unfolding the sheet.

According to another characteristic of the invention, it has been foreseen to include adhesive points on the sheet fastening portion, with the adhesive being protected for its carriage and distribution by means of a detachable sheet, leaving the user free to adhere one or several information and/or graphic sheets on random objects, taking aside at that moment the protection of said adhesive.

As it has been stated before, using several of said unfolding sheets it is possible to constitute an assembly which provides an arrangement thanks to which it is possible to include on a surface it may possess also information and/or graphic elements, such as a drawing, catalogue or similar in a plurality of likewise information and/or graphic units (with differentiated contents although eventually related), in an easy and quick way selectively unfoldable/foldable.

In a preferred embodiment of said assembly, the main support of the assembly is constituted by a flat part or section of another object, such as a drawing, brochure, book, book mark, box, bottle, etc. on which are generally adhered several units formed by folded sheets which include a pull, an essential element which actively assist to unfolding/folding the units.

### Short description of the drawings

The drawings attached show for example not limitating purpose several practical embodiments of the arrangement of the sheet with folds, representing the essential basis of the invention. It has to be borne in mind that the exact sizes and shapes of the different elements may significantly vary keeping the same basic reliability, without this means an essential change of the object of the invention.

In figure 1, a small wallet is drawn whose covers contain within them the folded sheet showing the external part of the pull tongue which may be folded on the cover.

Figures 2 and 3 show the way in which the wallet is open to provide the folded sheet unfolding when pulling said tongue.

Figure 4 shows the fully unfolded sheet and it can be seen that gravity cooperates in its opening.

Figures 5 and 6 show a sheet with a single horizontal fold and the tongue and covers joined to the second portion row.

Figure 7 shows a sheet with two horizontal folds and the elements, tongue and covers, joined to the central portions row.

Figure 8 shows a sheet with one horizontal fold and the pull tongue, the sheet being not adhered to any supporting surface which will be decided by the user at the moment of using it, and for which it can bear an adhesive or fastening means on the rear face of one of its portions, distal and aligned with the tongue, protected by a detachable, disposable sheet.

Figure 9 shows a sheet with folds, such as figure 8, adhered to a commercial article. As said sheet has a single fold, it is turned down on the lower set and it is already stable by itself although it could show a fastening strip or seal.

Figure 10 illustrates a possible example of embodiment of the information assembly proposed, comprising a folder whose covers constitute the main support or bottom sheet which contains within it several of the unfoldable units, in several unfolding conditions, which makes possible to offer a plurality of differentiated or related informations.

Figure 11 shows a sheet with two horizontal folds where the row which contains the fastening portions is the central one.

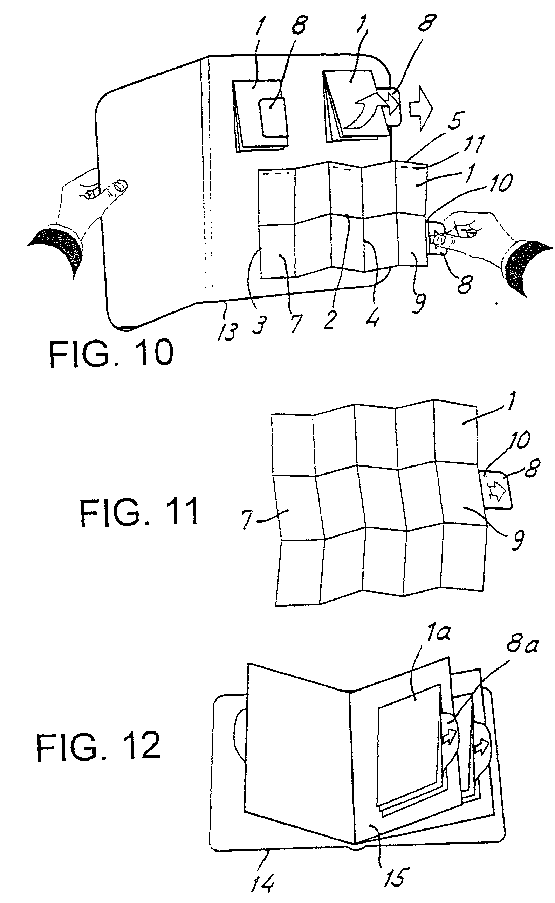

Last, figure 12 illustrates a variation of said invention information assembly applicable to a book which includes on each of its pages, a large sized unfoldable sheet as the explained herein, as each of the folded portions of the surface are slightly smaller than that of said book page.

### Detailed description of preferred embodiments

The element marked with numeral 1 shows the sheet with folds, where a first group of vertical folds marked with numeral 2 and a second group of horizontal folds marked with numeral 4 are formed. Numerals 3 and 5 are the first and the second edge of the sheet, respectively. Numeral 6 indicates the rigid or semi-rigid sheet which is folded in a dihedral angle constituting two covers (6a and 6b) hinged like a booklet or casing. Numeral 6c indicates (Fig. 9) a random article on which a sheet 1 with folds can be fastened. Numeral 7 is the sheet segment which is adhered on portion 6a. Numeral 8 indicates the tongue acting as pull and numeral 9 is the sheet segment or portion to which the pull is adhered. Numeral 10 is a slit where tongue 8 may be folded. The strokes with numeral 11 represent adhering points easy to release and to newly use, arranged in some of the row portions as a sheet retaining means, allowing to newly keep it folded, after it has been open. Numeral 12 approximately indicates the area of the cover, on the internal or the external face, which could bear strata with minute loops which together with other strata provided with minute and flexible hooks on one face of the tongue could constitute another retaining means of said sheet 1. In this same area approximately indicated by numeral 12 they could have cuts or die-cuts to constitute a retaining means for the covers.

In figure 10 there appears a folder 13 whose covers are the main support or bottom surface which contains within it several of the unfoldable sheets 1a, in different unfolding conditions, which makes possible to offer a plurality of differentiated or related informations.

In the examples illustrated in Fig. 1 to 7, the first part 6a has a size slightly bigger than the sheet 1 fastening portion 7 and the portions which when folded remain at the higher position have a shorter length not to interfere with the edge of said part 6a when opening it.

In figures 10 to 12, the element with numeral 1a shows the sheet with folds provided with a pull 8a, with a first group of horizontal folds with numeral 2 and a second group of vertical folds with numeral 4. Numerals 3 and 5 are the first and the second edge of the sheet, respectively. Numeral 13 indicates the bottom sheet or supporting object on which one or several sheets are adhered. Numeral 7 is the sheet segment which is adhered to the bottom sheet. Numeral 8 is the pull tongue and numeral 9 is the sheet segment to which the pull is adhered. Numeral 10 is one or several slits where the tongue 8 is capable to be folded and numeral 11 the adhesive points for retaining the sheet in folded condition.

Figure 12 as it was indicated shows a book 14 on each of the pages 15 of which is arranged a single sheet 1a as those indicated provided with a tongue acting as pull 8a. In this example, each of sheet 1a portions is large sized.

## Claims

1. Unfoldable information and/or graphic sheet of the type which comprises a first group of accordion folds (2) parallel to a first edge (3) of the sheet and at least on fold (4) perpendicular to the former ones, parallel to a second edge (5) of the sheet, said folds subdividing the sheet into portions, and said sheet (1) being capable of being fastened to a plane (6) or surface of an article (6c) by one of said portions (7) located close to one of the sheet sides, **characterized in that** it includes a tongue (8) joined to and protruding from a portion (9) of the sheet (1), located in a same row as the fastening portion (7) and distal therefrom, so that the sheet (1) unfolding by pulling said tongue (8) is made easier, said tongue also actively assisting to its folding.

2. Sheet according to claim 1 **characterized in that** said tongue (8) is a lateral extension of said distal portion (9) obtained by die-cut.

3. Sheet, according to claim 2, **characterized in that** said extension constituting the tongue (8) incorporates a film or varnish of a hardening-stiffening material.

4. Sheet, according to claim 1, **characterized in that** said tongue (8) comprises a rigid sheet part superimposed and adhered to said distal portion, and with at least one part of that part protruding from said portion, capable to be grasped.

5. Sheet, according to claim 1, **characterized in that** the material which constitutes it is resistant to water and other liquids, such as plastified paper.

6. Sheet, according to claim 1, **characterized in that** the row which contains the sheet (1) fastening portion (7) and bearing the tongue (8) is, in unfolded condition, the higher of said sheet, so that it is capable to partly open by gravity.

7. Sheet, according to claim 1, **characterized in that** the row which contains the sheet (1) fastening portion (7) and bearing the tongue (8) is a central band delimited by folds at both sides.

8. Sheet, according to claim 1, **characterized in that** the row which contains the sheet fastening portion (7) and bearing the tongue (8) is, in unfolded condition, the lower.

9. Sheet, according to any of above claims, **characterized in that** means have been provided to keep said sheet (1) in folded position, until it is operated on said tongue (8), consisting in adhesive points (10) easy to release and to newly use, arranged in some of the portions of a row which, in folded position, remain backed on other portions aligned with the fastening portion (7), so that it allows to reposition said sheet (1) in folding position after it was extended.

10. Sheet, according to claim 8, **characterized in that** in the event of joining the portion (7) to a surface of an article (6c) a sealing strip has been provided which keep the folded sheet portions joined.

11. Sheet, according to claim 1, **characterized in that** said tongue (8) shows a folding line (10) which allows it to be turned down on the set of folded portions and **in that** the sheet fastening portion (7) is joined to a first part (6a) of a rigid or semirigid sheet (6) which possesses a second part (6b) which is folded in dihedral angle and as a flap, whose parts constitute the two hinged covers as a booklet or casing, capable to contain within them all said sheet, in folded condition, including said folded tongue.

12. Sheet, according to claim 11, **characterized in that** the first part (6a) has a size slightly bigger than the sheet fastening portion (7) and **in that** the portions which in folded position are able to be covered by said second part (6b) have a shorter length.

13. Sheet, according to claim 1, **characterized in that** it has been provided to include adhesive points, on the sheet (1) fastening portion (7), the adhesive being protected for its carriage and distribution by means of a detachable sheet, so that it is possible to adhere one or several information and/or graphic sheets on random objects, taking aside **in that** moment the protection of said adhesive.

14. Information and/or graphic assembly, constituted on the basis of some sheets according to one of the claims 1 to 8, which may be joined to a plane or surface of an object by fastening one of the portions which form them located close to one of the sides of the sheet, **characterized in that** it includes two or several of said unfoldable sheets (1), backed on a common plane, so that it allows to offer a plurality of differentiated or related informations, each of said sheets including a tongue (8) joined to and protruding from a portion (9) of the sheet (1) located on a same row as the fastening portion (7) and distal therefrom, to facilitate unfolding by pulling said tongue and actively assisting to its further folding and **in that** means have been provided to keep each of said sheets (1), in folding position, until it is operated on said tongue (8) actively assisting in said keeping when repositioning the sheet to the folding position.

15. Assembly, according to claim 14, **characterized in that** said means to keep each of the sheets (1) in folding position comprise adhesive points (11), easy to release and to newly use, advantageously arranged in some of the row portions which, in folding condition remain backed on other portions aligned with the fastening portion (7).

16. Assembly, according to claim 14, **characterized in that** said means to keep each of the sheets (1) in folding position include a flap which may be turned down on the folded sheet assembly (1).

17. Assembly, according to claim 15 or 16, **characterized in that** it additionally includes an element as seal, such as a detachable strip or band, capable to fasten and to keep at leat part of each sheet folded until the moment of its first opening by pulling the tongue.

18. Assembly according to claim 14, **characterized in that** said plane or bottom object has sizes significantly bigger than portion (7) so that it allows to include several units, capable of being selectably unfolded, to offer a plurality of differentiated or related informations.

19. Assembly, according to claim 14, **characterized in that** it comprises two portion rows and the row which contains the sheet (1) fastening portion (7) and bearing the tongue (8) remains, in folding condition in a lower position, the other row being folded on itself and actively assisting by its own weight to keep the sheet folded, said arrangement constituting said means to keep said sheets folded.
